# EUROPÄISCHE PATENTSCHRIFT

(11) **EP 0 781 393 B1**
(45) Veröffentlichungstag und Bekanntmachung des Hinweises auf die Patenterteilung: **15.12.1999**
(21) Anmeldenummer: 95932700.8
(22) Anmeldetag: 08.09.1995
(51) Int. Cl.: F25B 17/08

(54) **SORPTIONS-KÜHLAGGREGAT**
SORPTION COOLING UNIT
UNITE DE REFRIGERATION PAR SORPTION

(30) Priorität: 12.09.1994 DE 4432428; 06.03.1995 DE 19507768
(43) Veröffentlichungstag der Anmeldung: 02.07.1997
(73) Patentinhaber: ELECTROLUX LEISURE APPLIANCES AG, 8500 Frauenfeld (CH)
(72) Erfinder: EBBESON, Bengt, Electrolux Leisure Appliances AG, CH-8500 Frauenfeld (CH)
(74) Vertreter: Grosse, Wolfgang, Dipl.-Ing.
(86) Internationale Anmeldenummer: EP9503548
(87) Internationale Veröffentlichungsnummer: WO9608684

(56) Entgegenhaltungen:
- FR-A- 1 018 022
- FR-A- 2 623 889
- US-A- 4 205 531

## Beschreibung

Die Erfindung betrifft ein Sorptions-Kühlaggregat, insbesondere für eine Kühlbox, mit einem beheizbaren Sorberteil, das mit einem sorptionsfähigen Material gefüllt ist, welches bei Normaltemperatur eine Flüssigkeit sorbiert und diese bei Erwärmung wieder abgibt.

Solche Kühlaggregate, die insbesondere in Kleinkühlgeräten und Luftkühlern von Klimatisierungseinrichtungen verwendet werden, bestehen im wesentlichen aus einem Sorberteil, einem Kondensator und einem Verdampfer, die durch eine Leitung miteinander verbunden sind und ein geschlossenes System bilden. In dem Sorberteil wird das mit einer Flüssigkeit angereicherte sorptionsfähige Material erhitzt und gibt dabei die sorbierte Flüssigkeit in Dampfform ab. Der Dampf kondensiert in dem Kondensator, und die kondensierte Flüssigkeit sammelt sich in dem Verdampfer. Wenn die Wärmequelle für das sorptionsfähige Material abgestellt wird und das Material abkühlt, saugt das Material die Feuchtigkeit aus der mit Dampf gesättigten Leitung auf und erzeugt dabei in der Leitung einen niedrigen Druck, der die in dem Verdampfer befindliche Flüssigkeit verdampfen läßt und gegebenenfalls bei niedriger Temperatur zum Kochen bringt. Der Verdampfer entzieht dabei der Umgebung Wärme und kann in einer Kühlbox als Kühlteil verwendet werden.

Kühlgeräte der vorbeschriebenen Art sind einfach aufgebaut und weisen keine bewegten Teile auf. Als sorptionsfähiges Material kann beispielsweise ein Zeolith verwendet werden, das in der vorstehend beschriebenen Weise mit Wasser reagiert. Das Wasser kommt dabei wegen des niedrigen Drucks bei wenigen Graden und gegebenenfalls auch bei Minustemperaturen in dem Verdampfer zum Kochen. Für Kühlaggregate dieser Art sind jedoch auch andere Sorptionsmaterialien und Flüssigkeiten geeignet, wie zum Beispiel Salz und Ammoniak.

Beim Austreiben der Feuchtigkeit aus dem sorptionsfähigen Material ist es wichtig, daß das Material möglichst gleichmäßig erwärmt wird. Dies bereitet insbesondere dann gewisse Schwierigkeiten, wenn die Erwärmung durch eine Wärmequelle erfolgt, wie es bei Kühlaggregaten der Fall ist, die unabhängig von elektrischem Strom sein soll, zum Beispiel beim Camping oder auf Booten. Da die Temperatur an der Flamme im Vergleich mit der Temperatur der erzeugten Wärme sehr hoch ist, kommt es bei einem Sorberteil der in Rede stehenden Art darauf an, die Wärme so auf das sorptionsfähige Material zu übertragen, daß keine örtlichen Überhitzungen entstehen.

Es wurde bereits ein Sorptions-Kühlaggregat der gattungsgemäßen Art vorgeschlagen (Unveröffendlichte Patentanmeldung DE-P4432428.6), bei dem das Sorberteil eine im wesentlichen senkrechte und in seiner Längsrichtung durchgehend rohrförmige Öffnung aufweist. Der verbleibende Innenraum des Sorberteils ist allseitig geschlossen, und sein Inneres ist über eine Leitung mit einem Verdampferteil verbunden. Unter der rohrförmigen Öffnung ist ein Heizelement, insbesondere ein Spiritusbrenner vorgesehen. Nach der Regenerationsphase, bei welcher der Wasserdampf unter dem Einfluß der Wärmequelle aus dem Zeolith ausgetrieben und über die Verbindungsleitung dem Verdampfer/Kondensator zugeleitet wurde, ist das Sorberteil derart erwärmt, daß es abgekühlt werden muß. Da das Sorberteil zur besseren Wärmeübertragung an der Innenseite der durchgehenden Öffnung mit einem doppelwandigen Ringzylinder ausgestattet ist, in dem sich teilweise Wasser befindet, das während der Regenerationsphase verdampft ist, ergibt sich beim Abkühlen folgendes Problem: taucht man beispielsweise das Sorberteil in ein kaltes Wasserbad (z.B. Seewasser) ein, dann befindet sich in der rohrförmigen, das Sorberteil durchgreifenden Öffnung Seewasser. Kühlt nun das Seewasser den teilweise mit Wasserdampf gefüllten doppelwandigen Ringzylinder an seiner Innenseite ab, dann kondensiert der Dampf in dem doppelwandigen Ringzylinder an der abgekühlten Innenwand und läuft an der Innenfläche nach unten. Dort sammelt sich das Wasser und wird vom dem erhitzten Zeolith wieder verdampft, wobei der Dampf wieder nach oben steigt. Das bedeutet, daß sich im oberen Teil des doppelwandigen Ringzylinders permanent Dampf und im unteren Teil permanent Wasser befindet, so daß eine ungleichmäßige Abkühlung des in dem Sorberteil enthaltenen Zeoliths stattfindet.

Ein weiteres Problem ergibt sich dadurch, daß das von dem doppelwandigen Ringzylinder gebildete Innenrohr sehr dünn ausgebildet sein sollte, um einen guten Wärmeübergang zu gewährleisten. Ist nun die Flamme des Spiritusbrenners verhältnismäßig groß, dann wird dieses Innenrohr bei der Erhitzung stark erwärmt und erweicht. Da innerhalb des doppelwandigen Ringzylinders ein Druck von ca. 80 bar herrschen kann, kann es vorkommen, daß die Innenwandung des Ringzylinders flach zusammengedrückt wird, so daß die Flamme nicht mehr durch den Ringzylinder nach oben entweichen kann und infolgedessen nicht mehr die gewünschte Wärmeverteilung über die Innenseite des Ringzylinders erfolgt. Man könnte sich damit behelfen, daß das Innenrohr des Ringzylinders besonders stark ausgeführt wird, was aber den Nachteil mit sich bringt, daß das Gesamtgewicht des Sorptions-Kühleraggregates erheblich vergrößert wird.

Der Erfindung liegt daher die Aufgabe zugrunde, ein Sorptions-Kühlaggregat der gattungsgemäßen Art dahingehend zu verbessern, daß eine verbesserte Wärmeaufnahme während der Regenerationsphase sowie eine verbesserte Abkühlung nach dieser Regenerationsphase ermöglicht wird und daß bei gleichzeitiger baulicher einfacher Ausführung eine Leistungsverbesserung gegenüber dem vorgeschlagenen Kühlaggregat bei gleichzeitigem Einsatz unterschiedlicher Energiequellen zum Beheizen gewährleistet ist.

Aus der US-A 42 05 531 ist ein Absorptionskühlgerät bekannt, bei dem zwei Behälter vorgesehen sind, von denen einer mit sorptionsfähigem Material gefüllt ist. Dabei ist in dem sorptionsfähigen Material ein Rohr mit Öffnungen aufgenommen, so daß das Fluid in das sorptionsfähige Material gelangen kann. Die Beheizung des sorptionsfähigen Materials erfolgt dabei über eine an dem Rohr angeordnete elektrische Heizschleife.

Ferner ist aus der FR-A 10 18 022 ein Sorptionsgerät bekannt, bei dem die Beheizung des Sorptionsbehälters über ein Rohr erfolgt, das durch den Sorptionsbehälter geführt ist. Das Beheizen erfolgt durch eine Gasflamme, wobei die heißen Abgase durch das Rohr nach oben abgeführt werden.

Diese Aufgabe wird gemäß der Erfindung dadurch gelöst, daß das Sorberteil von einem mit dem sorptionsfähigen Material gefüllten Körper gebildet ist, der von einem im wesentlichen aufrecht angeordneten Beheizungskörper durchgriffen ist, welcher einen in der Regenerationsphase zum Beheizen und in der Abkühlphase zumindest teilweise zum Abkühlen dienenden Abschnitt aufweist, und daß der Innenraum des Sorberteils über eine Leitung mit einem Verdampferteil verbunden ist, wobei der in der Regenerationsphase zum Beheizen und in der Abkühlphase zumindest teilweise zum Abkühlen dienende Abschnitt aus dem Sorberteil vorsteht.

Sorberteil und Verdampferteil sind als starre mobile Baueinheit ausgebildet, welche mit dem Verdampferteil in einen isolierten Kühlbehälter einhängbar ist. Hierbei kann es sich zum Beispiel um eine durch einen Deckel verschließbare Kühlbox herkömmlicher Art oder beispielsweise um einen isolierten Flüssigkeitsbehälter, wie zum Beispiel eine Milchkanne, handeln, in welche das Verdampfer-/Kondensatorteil eingehängt wird. Der Zylinderkörper ist an seiner Zylinderfläche und dem Boden mit einer Wärmeisolierung versehen, wobei diese beispielsweise von einer Glasfaserschicht oder aber auch von einem mittels Rippen oder dergleichen auf Abstand gehaltenen Gehäuse gebildet werden kann, bei welchem der Zwischenraum zwischen der Zylinderaußenfläche und der Gehäusefläche evakuiert und mit einem Kühlmittel befüllbar ist. Die Oberseite des Zylinderkörpers ist nicht mit einer Wärmeisolierung ausgestattet, da diese Oberseite von den heißen Brenngasen eines Heizelementes in der Regenerationsphase beaufschlagt wird, beziehungsweise beim Abkühlen nach der Regenerations- oder Austreibungsphase einem Kühlmittel (z.B. Seewasser) unmittelbar ausgesetzt wird.

Der Zylinderkörper besitzt an seiner Oberseite ferner in vorteilhafter Weise eine als Griff beziehungsweise Stützeinrichtung dienende Halterung. Diese Halterung ist vorzugsweise von einem sich über Stützen am Zylinderkörper abstützenden Ringelement gebildet, welches den aus dem Zylinderkörper vorstehenden Teil des Beheizungskörpers umschließt. Die Halterung hat folgende Vorteile: mit ihr kann der Zylinderkörper in der Regenerationsphase, in welcher er um 180° gegenüber der Kühlphase gedreht ist, in die Halterung eines Spiritusbrenners eingesetzt werden, wobei das Ringelement als Griffteil benutzt werden kann. Der Sockel des Spiritusbrenners wird von dem Zylinderkörper derart auf Abstand gehalten, daß die Flamme im wesentlichen nur den aus dem Sorberteil vorstehenden Abschnitt des Beheizungskörpers umströmt. Zur verbesserten Flammenführung besitzt der Spiritusbrenner einen Windschutz, welcher bis nahe an den Zylinderkörper heranreicht und diesen konzentrisch umgibt. An der Außenseite des Zylinderkörpers sind ferner Befestigungselemente, zum Beispiel Haken vorgesehen, mit denen dieser an der Außenseite der Kühlbox derart eingehängt werden kann, daß das Gewicht des Zylinderkörpers aufgenommen wird und nicht auf der Verbindungsleitung zum sich innerhalb der Kühlbox befindlichen Verdampfer ruht. Die Haken sind derart verteilt und angeordnet, daß der Zylinderkörper für die Regenerationsphase um 180° umgedreht und zusammen mit dem Verdampferteil an der Außenseite der Kühlbox angehängt werden kann.

In vorteilhafter Weise ist der Beheizungskörper von einem zentrisch im Zylinderkörper angeordneten und sich über seine Länge erstreckenden, geschlossenen Rohr gebildet, das evakuiert und teilweise mit einer Flüssigkeit, insbesondere mit Wasser gefüllt ist. Der Beheizungskörper kann jedoch auch exzentrisch angeordnet sein, falls dies aus Platzgründen zweckmäßig sein sollte. In der Beheizungsphase wird das Wasser durch die Flamme des Brennerelementes derart erhitzt, daß es verdampft, wobei der Dampf nach oben steigt und die Wärme gleichmäßig über die Außenwand des Beheizungskörpers an die umgebende Füllung aus sorptionsfähigem Material überträgt. Zum Zwecke des Einfüllens besitzt der rohrförmige Beheizungskörper an seinem aus dem Sorberteil herausragenden Ende einen verschließbaren Einfüllstutzen. Ferner ist dieses freie Ende des Beheizungskörpers von einem Brennerrohr größeren Durchmessers umgeben, welches mittels Wärmeleitrippen am Rohr des Beheizungskörpers abgestützt ist. Da sich in der Wandung dieses Brennerrohres Bohrungen abgestufter Größe und bestimmter Anordnung befinden, wird der im Brennerrohr brennenden Flamme i.w. nur im Bereich der Öfffnungen Sauerstoff zugeleitet, so daß sie in zahlreiche kleinere Flammen kürzerer Reichweite über das Brennerrohr verteilt wird und kein unmittelbarer Kontakt mit dem kalten Beheizungskörper stattfindet und dadurch eine saubere störungsfreie Verbrennung gewährleistet ist. Die heißen Abgase strömen an der ohne Wärmeisolierung ausgebildeten Oberseite des Zylinderkörpers entlang und treten durch den zwischen dem Windschutz des Heizelementes und der Zylinderwand gebildeten Spalt aus, um anschließend an der Zylinderwand entlang nach oben zu strömen. Da sich ferner das in dem Beheizungskörper befindliche Wasser infolge der Verdampfung gleichmäßig in dem Beheizungskörper ausbreitet, ist eine ausgezeichnete Wärmeverteilung im Inneren als auch am Äußeren des Zylinderkörpers erzielbar, so daß das in dem Zeolith sorbierte Wasser schnell und gleichmäßig aus dem Zylinderkörper ausgetrieben wird. Die Wärme wird auch in dem Zeolith über in gleichen Abständen verteilte Wärmeleitbleche über den Zeolithquerschnitt gleichmäßig verteilt.

Soll nach der Austreibungsphase, nach welcher die Füllung aus sorptionsfähigem Material erhitzt ist, dieses abgekühlt werden, kann man den gesamten Behälter in Seewasser tauchen, wobei der Zylinderkörper an seiner Außenseite abgekühlt, auch durch den aus dem Sorberteil hervorstehenden Abschnitt des Beheizungskörpers gekühlt wird.

In weiterer vorteilhafter Ausgestaltung der Erfindung kann es jedoch auch vorgesehen sein, daß der Zylinderkörper sowohl in der Regenerationsphase als auch in der Kühlphase von oben in ein an seiner oberen Seite offenes, dosenförmiges Gehäuse einhängbar ist, derart, daß er von gegenüber der Dosenwand vorstehenden Zentrierungseinrichtungen zur Dosenwand und zum Dosenboden auf Abstand gehalten wird. Unterhalb des Zylinderkörpers kann sich in dem dosenförmigen Gehäuse ein Heizelement befinden. Der Zylinderkörper ist in diesem Fall an seiner Außenseite nicht mit einer Wärmeisolierung versehen, so daß in der Regenerationsphase, wenn der Brenner brennt, die heiße Luft an der Außenseite des Zylinderkühlers entlang strömen kann und das Wasser aus dem Zeolith ausgetrieben wird. Dabei ist von wesentlichem Vorteil, daß die Wärme des Brenners an der Innenseite durch den Beheizungskörper auf den gesamten Zylinderkörper gleichmäßig verteilt wird und daß die heißen Abgase des Brenners an der Außenseite des Zylinderkörpers entlang strömen und diesen erwärmen, so daß über den Querschnitt des Zylinderkörpers keine Wärmeverluste entstehen, da die Temperaturen in der mittleren Beheizungseinrichtung und an der Außenseite des Zylinderkörpers in etwa gleich sind. Eine gleichmäßige Regeneration des Zeoliths ist damit gewährleistet.

In der Kühlphase, bei der der Brenner ausgestellt ist, wird durch die Adsorption des Wassers in Zeolith Wärme erzeugt, welche über die ringförmig um die Beheizungseinrichtung angeordneten Rippen gleichmäßig verteilt wird und an die Außenseite abgeleitet wird, so daß hier eine Luftströmung von unten nach oben erzeugt wird, da in vorteilhafter Weise im unteren Bereich des dosenförmigen Gehäuses Luftlöcher vorgesehen sind. Durch diese Luftlöcher wird die Außenluft angesaugt, welche an der Außenseite des Zylinderkörpers entlang strömt und diesen abkühlt. Da der Zylinderkörper bei dem vorgenannten vorteilhaften Ausführuiigsbeispiel keine Isolierung aufweist, kann die im Zeolith erzeugte Wärme nach oben abgeführt werden.

Ein weiterer Vorteil der vorgenannten Ausführungsform der Erfindung besteht darin, daß während der Regenerationsphase, in welcher der Kondensator/Verdampfer außerhalb der Kühlbox befindet, die Vorrichtung zwar aus der Box herausgehoben, aber nicht mehr um 180° umgedreht werden muß. Vielmehr weist das dosenartige Gehäuse an seinem oberen Rand zwei kleine Ausschnitte auf, welche für die Aufnahme des Verbindungsrohres zwischen Zylinderkörper und Verdampfer/Kondensator dienen.

Das Verbindungsrohr, welches als Handgriff dient, besitzt eine Isolierung, da sich dieses Rohr während der Regenerationsphase aufheizt. Die Isolierung dient gleichzeitig als Dichtung für den Ausschnitt der Kühlbox. Das dosenförmige Gehäuse kann vorteilhaft aus einem 0,6mm starken Edelstahlblech ähnlich wie eine Konservendose hergestellt sein, d.h. daß der Boden in den Rand eingefalzt ist. Das Gehäuse läßt sich auf diese Weise sehr preiswert herstellen. Als Material kann auch Aluminium verwendet werden.

Vor dem Einsetzen des Verdampfers/Kondensators in die Kühlbox, d.h. nach der Regenerationsphase, wird das Gerät z.B. in Wasser eingetaucht, wobei man es an dem oberen Isolationsgriff anfaßt, da der heiße Zylinderkörper an seiner Außenseite nicht wärmeisoliert ist. Da diese Wärmeisolierung fehlt, kühlt sich die Außenfläche beim Eintauchen in ein Wasserbad oder in Meerwasser schnell ab, so daß der Verdampfer nach einer Abkühlzeit von etwa 5 bis 10min in die Kühlbox eingesetzt werden kann. Der vorbeschriebene Vorgang ist allerdings nur notwending, wenn man das Gerät unmittelbar nach der Regenerationsphase sofort zum Kühlen einsetzen will. Wenn man z.B. die Regeneration am Wochenende nach einem Segeltörn vorninunt und das Gerät in dem Behälter lagert, wobei sich der Verdampfer außerhalb der Kühlbox befindet, dann kühlt es während der Woche von alleine ab und man kann es dann am Wochenende wieder für einen neuen Segeltörn sofort zum Kühlen verwenden. Man kann ungefähr damit rechnen, daß nach Beendigung der Regenerationsphase ein Abkühlen nach 2 bis 4 Stunden erfolgt ist, so daß es dann wieder zum Kühlen eingesetzt werden kann.

Gemäß einem weiteren vorteilhaften Merkmal der Erfindung kann vorgesehen sein, daß die verbindungsleitung zwischen dem Sorberteil und dem Verdampferteil von einem Rohr gebildet ist, welches zylinderseitig achsparallel zu dem Beheizungskörper angeordnet ist und Öffnungen zur Durchleitung der sorbierbaren Flüssigkeit aufweist und welches verdampferseitig durch ein Ventil verschließbar ist. Das Ventil ist in seinem Schließzustand durch eine Ventilbetätigungseinrichtung feder- und/oder druckbelastet oder kann von Hand verstellbar sein. Wird das Ventil geschlossen, wird der Kühlvorgang unterbrochen, da das Zeolith infolge der getrennten Verbindung zum Verdampfer/Kondensator keinen Wasserdampf aufnehmen kann. Das Ventil kann von dem während der Regenerationsphase erzeugten Dampfdruck entgegen der Federkraft und/oder der Druckkraft der Ventilbetätigungseinrichtung, insbesondere gegen die Kraft des Umgebungsluftdrucks geöffnet werden. Dabei ist die Ventilbetätigungseinrichtung in vorteilhafter Weise von einem Edelstahlbalg gebildet, der an seiner einen Seite von dem in der Verbindungsleitung herrschenden Druck und auf seiner anderen Seite von dem Umgebungsluftdruck beaufschlagt ist. Zur Vergrößerung seiner Oberfläche kann das Verdampferteil zusätzlich eine achsparallele Durchgangsbohrung aufweisen, die derart bemessen ist, daß z.B. eine herkömmliche Flasche eingesetzt werden kann.

Da der Zylinderkühler und der Kondensator/Verdampfer eine Baugruppe bilden, ist es denkbar, daß diese Teile gemeinsam in eine Regenerationsvorrichtung einsetzbar sind, die einen wärmeisolierten Gehäuseteil für den Zylinderkörper und einen kühlbaren Gehäuseteil für den Verdampfer aufweist. Der wärmeisolierte Gehäuseteil kann dabei an seinem unteren Ende das Heizelement aufweisen, während der kühlbare Gehäuseteil mit einem den Verdampfer umschließenden Kühlmittel befüllbar ist und/oder an seiner Außenseite Kühlrippen aufweist. Nach der Regenerationsphase kann die Baueinheit aus der Regenerationsvorrichtung entnommen werden, woraufhin der Kondensator z.B. in eine Milchkanne zum Kühlen der Milch eingesetzt und der Zylinderkühler in einen Wasserbehälter zum Aufwärmen von Wasser eingesetzt werden, welches z.B. als Brauchwasser zum Spülen von Milchkannen verwendet werden kann.

Gemäß einem weiteren Ausführungsbeispiel ist es denkbar, daß der Zylinderkörper an seiner Außenseite von einem geschlossenen Gehäuse umgeben ist und daß der Hohlraum zwischen Zylinderkörper und Gehäuse mit einem Kühlmedium befüllbar ist, welches über ein mit dem Gehäuse verbundenen Vorratsbehälter zuführbar ist. Der Vorratsbehälter kann dabei derart am Gehäuse angeordnet sein, daß das Kühlmedium unter dem Einfluß der Schwerkraft in der Regenerationsphase aus dem Gehäuse in den Vorratsbehälter entweicht, beziehungsweise in der aktiven Kühlphase aus dem Vorratsbehälter in das Gehäuse einströmt. Wenn nämlich Wasserdampf vom Zeolith sorbiert wird, erwärmt sich das Zeolith in zunehmendem Maße, so daß der Wirkungsgrad der Sorption verringert wird. Aus diesem Grund ist die Kühlung des Zylinderkörpers vorgesehen, die bei dem vorbeschriebenen Ausführungsbeispiel mittels des Kühlmediums in denm Gehäuse erfolgen kann und bei dem zuerst beschriebenen Ausführungsbeispiel durch die Umgebungsluft, die den aus dem Sorberteil herausragenden Abschnitt umspült.

Zur Verbesserung der Kühlung kann das den Zylinderkörper umgebende Gehäuse zusätzlich an seiner Außenseite mit Rippen versehen sein, die entweder aufgesetzt oder als hohle Gehäuseteile ausgebildet sind, so daß das Kühlmedium zusätzlich in die Rippen eindringen kann.

In der Regenerations- oder Austreibungsphase wird der Wasserdampf aus dem Zeolith ausgetrieben und über ein achsparallel zu dem Beheizungskörper angeordnetes Rohr mit Öffnungen zur Durchleitung des Wasserdampfes über die Verbindungsleitung zum Verdampfer geleitet. Dieses Rohr ist verdampferseitig mit einem Ventil ausgestattet, welches in seinem Schließzustand belastet, insbesondere federbelastet ist. Das normalerweise geschlossene Ventil wird automatisch dann geöffnet, wenn der in dem Sorberteil während der Austreibungsphase erzeugte Dampfdruck einen bestimmten Wert übersteigt und wird automatisch wieder geschlossen, wenn dieser Druck infolge nachlassender Austreibung wieder abfällt. Das Ventil ist ferner von Hand verstellbar, so daß es zu beliebiger Zeit bewußt geöffnet werden kann, um den Kühlvorgang in der eingangs beschriebenen Weise in gang zu setzen.

Das Heizelement kann in vorteilhafter Weise ein mit festem, flüssigem oder gasförmigem Brennstoff betriebener Brenner sein, aber auch eine Solaranlage, welche einen Parabolspiegel aufweist, in dessen Brennpunkt der aus dem Sorberteil vorstehende Abschnitt des Beheizungskörpers angeordnet wird. Auf diese Weise läßt sich zum Beispiel das erfindungsgemäße Sorptions-Kühlaggregat in heißen Entwicklungsländern zur Kühlung von Flüssigkeiten, insbesondere von Milch verwenden, wobei sich gezeigt hat, daß die etwa 37°C aufweisende Milch innerhalb von relativ kurzer Zeit (1,5 bis 2 Stunden), bei einer Menge von ca. 17 Liter auf 5° bis 7° abgekühlt werden kann. Der Vorteil der erfindungsgemäßen Einrichtung besteht in der Einfachheit seines Aufbaus, der Wartungsfreiheit und der langen Lebensdauer infolge verschleißfester, nicht bewegter Teile.

Weitere Vorteile, Merkmale und Einzelheiten der Erfindung ergeben sich aus der nachfolgenden Beschreibung von bevorzugten Ausführungsbeispielen anhand der Zeichnung. Darin zeigen:
- **Fig.1**: eine Vertikalschnittansicht durch ein erfindungsgentäßes Sorptions-Kühlaggregat, welches in eine Kühlbox eingehängt ist, wobei die aktive Kühlphase gezeigt ist;
- **Fig. 2**: eine schematische Draufsicht der Anordnung gemäß Fig. 1;
- **Fig. 3**: eine Ansicht der erfindungsgemäßen Vorrichtung in der Regenerations-/Austreibungsphase, bei der sich der Zylinderkörper und das Verdampfungsteil außerhalb der Kühlbox befinden;
- **Fig. 4**: eine Draufsicht der Anordnung gemäß Fig. 3;
- **Fig. 5**: eine Detailansicht einer weiteren Ausführungsform für die Anordnung und Ausbildung des Heizelementes;
- **Fig. 6**: ein weiteres Ausführungsbeispiel für ein erfindungsgemäßes Sorptions-Kühlaggregat;
- **Fig. 7**: das dosenförmige Gehäuse, in welches das Sorptions-Kühlaggregat während der Kühlphase bzw. Regenerationsphase einhängbar ist, ohne daß es um 180° gedreht wird;
- **Fig. 8**: eine weitere vorteilhafte Ausführungsform des erfindungsgemäßen Sorptions-Kühlaggregats, welches in eine Regenerationsvorrichtung zur Regeneration einsetzbar ist;
- **Fig. 9**: der praktische Einsatz des erfindungsgemäßen Sorptions-Kühlaggregats zum Kühlen von Milch in einer Milchkanne und
- **Fig. 10**: eine weitere Ausführungsform des erfindungsgemäßen Sorptions-Kühlaggregats, welches speziell für die Entwicklungsländer zum Kühlen von Milch entwickelt und mittels Solarenergie aufheizbar ist.

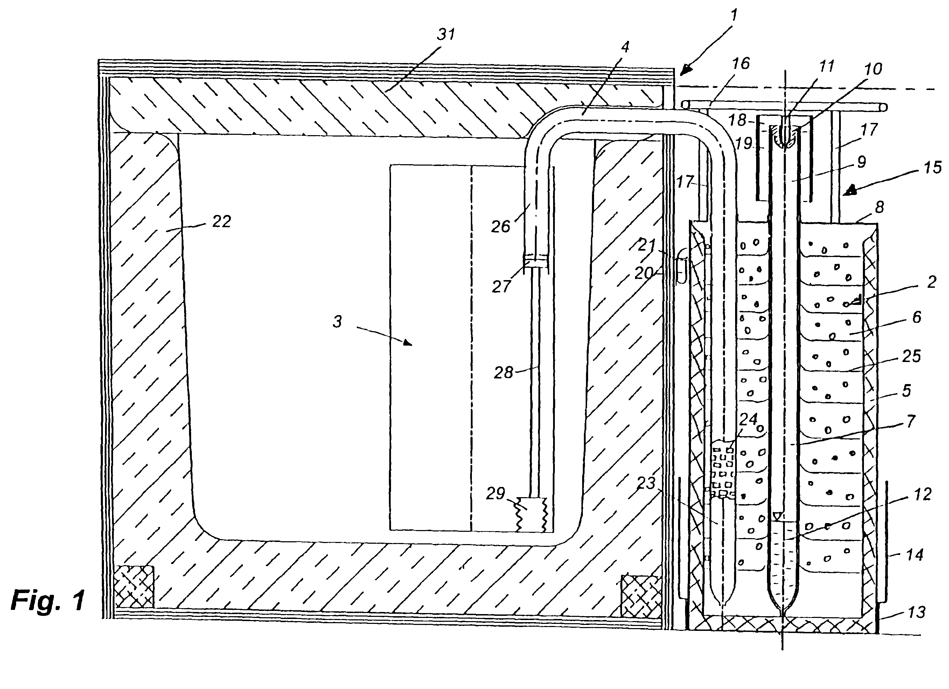

Das in der Fig. 1 gezeigte Sorptions-Kühlaggregat besteht im wesentlichen aus dem Sorberteil, welches von dem Zylinderkörper 2 gebildet ist, und dem Verdampferteil 3, die über eine Verbindungsleitung 4 miteinander in Verbindung stehen. Der Zylinderkörper 2 ist an seiner Zylinderfläche und im Bodenbereich mit einer Isolierung 5 versehen. Innerhalb dieser Isolierung befindet sich das sorptionsfähige Material, welches zum Beispiel von Zeolith 6 gebildet ist.

In der Achsrichtung des Zylinderkörpers 2 erstreckt sich konzentrisch ein rohrförmiger Beheizungskörper 7, welcher aus der nicht mit einer Isolierung versehenen Deckenstirnfläche 8 des Zylinderkörpers 2 mit einem Abschnitt 9 herausragt. Der rohrförmige Beheizungskörper 7 ist an seinem freien Ende mit einem Verschluß 10 versehen, in welchem sich ein Füllnippel 11 befindet, über welchen der Beheizungskörper 7 mit einer Flüssigkeit, insbesondere mit Wasser 12 teilweise gefüllt ist. Im übrigen ist der rohrförmige Beheizungskörper 7 evakuiert.

Der Zylinderkörper 2 ist mit seinem unteren Ende in eine Brenneraufnahme 13 eingesetzt, der einen Windschutz 14 aufweist, worauf später noch eingegangen wird.

An seiner Oberseite besitzt der Zylinderkörper 2 eine Halterung 15, welche im wesentlichen von einem Ringelement 16 und Stützen 17 gebildet ist, die den aus dem Zylinderkörper 2 herausragenden Abschnitt 9 des Beheizungskörpers 7 umschließen. Dieser Abschnitt 9 besitzt im übrigen ein ihn konzentrisch umgebendes Brennerrohr 18 größeren Durchmessers, welches mit Rippen 19 am Abschnitt 9 befestigt ist.

Der Zylinderkörper 2 trägt an seiner Außenseite hakenförinige Befestigungselemente 20, mit welchen er in Ösen 21 an der Außenseite der Kühlbox 22 befestigt ist.

Parallel zum Beheizungskörper 7 ist ein Rohr 23 angeordnet, welches in die Verbindungsleitung 4 übergeht, wobei das Rohr 23 schlitzartige Öffnungen 24 aufweist, die in der Fig. 1 nur abschnittsweise gezeigt sind, um ein Durchtreten des Wasserdampfes zu ermöglichen.

Zur besseren Verteilung der Wärme innerhalb des Zeoliths 6 sind Wärmeleitbleche 25 vorgesehen.

Die Verbindungsleitung 4 mündet mit einem Stutzen 26 in den Verdampfer 3, wobei der Stutzen 26 an seinem freien Ende durch ein Ventil 27 verschlossen ist. Das Ventil 27 kann automatisch über eine Ventilstange 28 und eine Federeinrichtung 29, die insbesondere von einem dehnungsfähigen Edelstahlbalg gebildet ist, verschlossen werden. Der Balg 29 ist an einer Seite dem in der Verbindungsleitung 4 herrschenden anfänglichen Vakuum und auf seiner anderen Seite dem Umgebungsluftdruck ausgesetzt, so daß das Ventil anfänglich geschlossen ist. Erst wenn der Dampfdruck in der Leitung den Umgebungsluftdruck übersteigt, öffnet das Ventil. Es ist auch eine nicht gezeigte Bedienungseinrichtung für das Ventil vorgesehen, mit welcher das Ventil von Hand geöffnet werden kann. Die Federkraft und der Umgebungsluftdruck werden von dem Dampfdruck, der sich in der Austreibungsphase im Zylinderkörper 2 ausbildet und über die Verbindungsleitung 4 auf das Ventil einwirkt, überwunden, so daß sich das Ventil öffnet, solange der Dampfdruck genügend hoch ist. Nimmt der Dampfdruck ab, dann schließt das Ventil bei einem bestimmten Schwellwert, und die Vorrichtung kann solange ohne Kühl funktion gelagert werden, bis der Kühlvorgang durch manuelles Öffnen des Ventils 27 in Gang gesetzt wird.

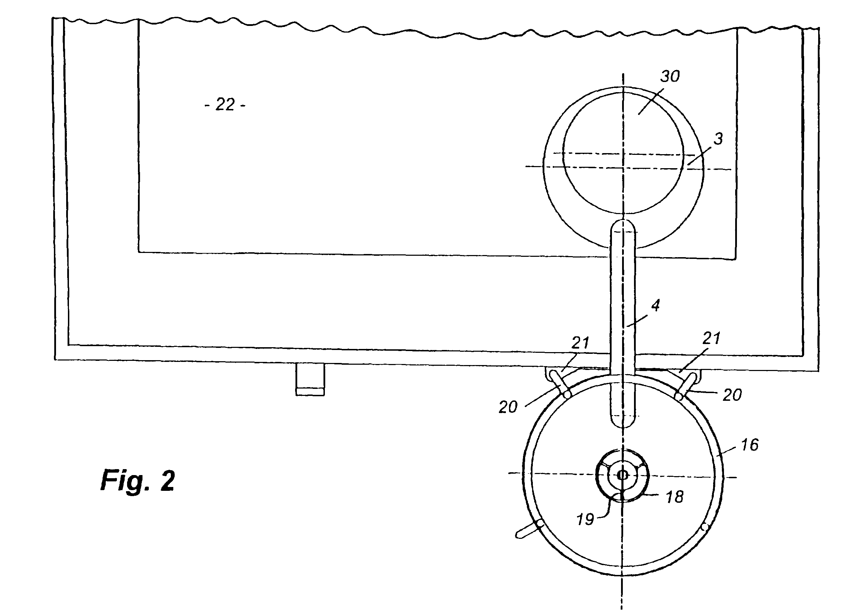

Wie aus der Fig. 2 ferner zu entnehmen ist, ist der Verdampfer 3 mit einer verhältnismäßig großen innenliegenden Durchgangsbohrung 30 versehen, die einerseits dazu dient, die Kühloberfläche des Verdampfers zu vergrößern, und andererseits dazu geeignet ist, eine Getränkeflasche aufzunehmen.

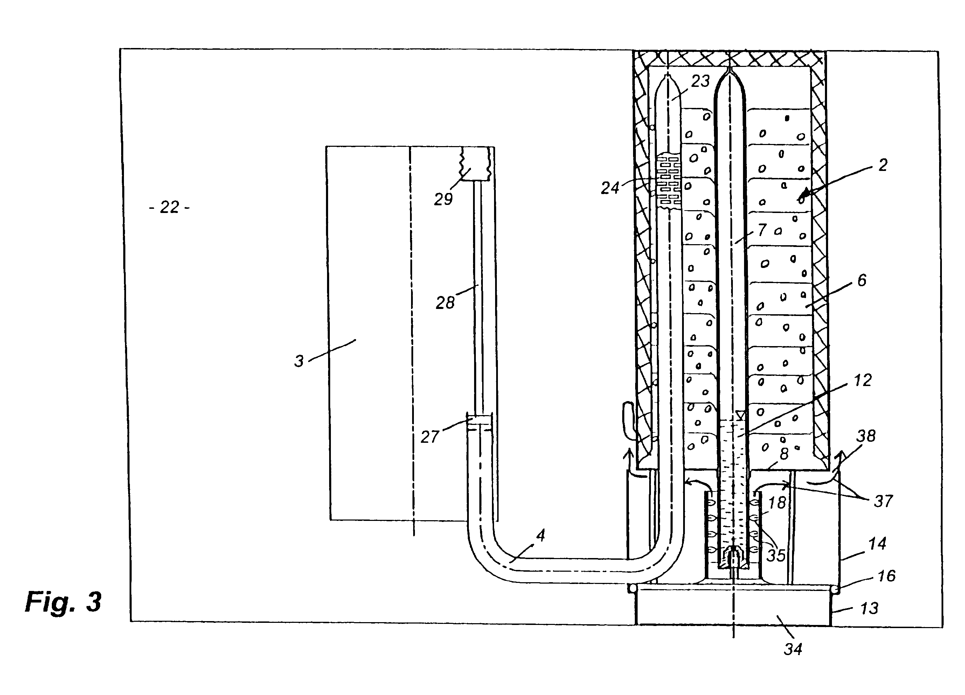

Bei der in der Fig. 3 gezeigten Stellung ist der Verdampfer 3 aus der Kühlbox 22 herausgenommen worden, und das Sorptions-Kühlaggregat 1 ist um 180° gedreht worden, wobei das Ringelement 16 in die Brenneraufnahme 13 eingesetzt und der Zylinderkörper 2 mittels eines Hakens 32 in der Öse 21 gehalten wird, während der Verdampfer 3 in einer an der Kühlbox 22 angeordneten Halterung 33 aufgenommen wird. Das Brennerrohr 18 kann nun mit Hilfe eines Brenners 34 beheizt werden, wobei die Flamme 35 das Brennerrohr 18 umspielt.

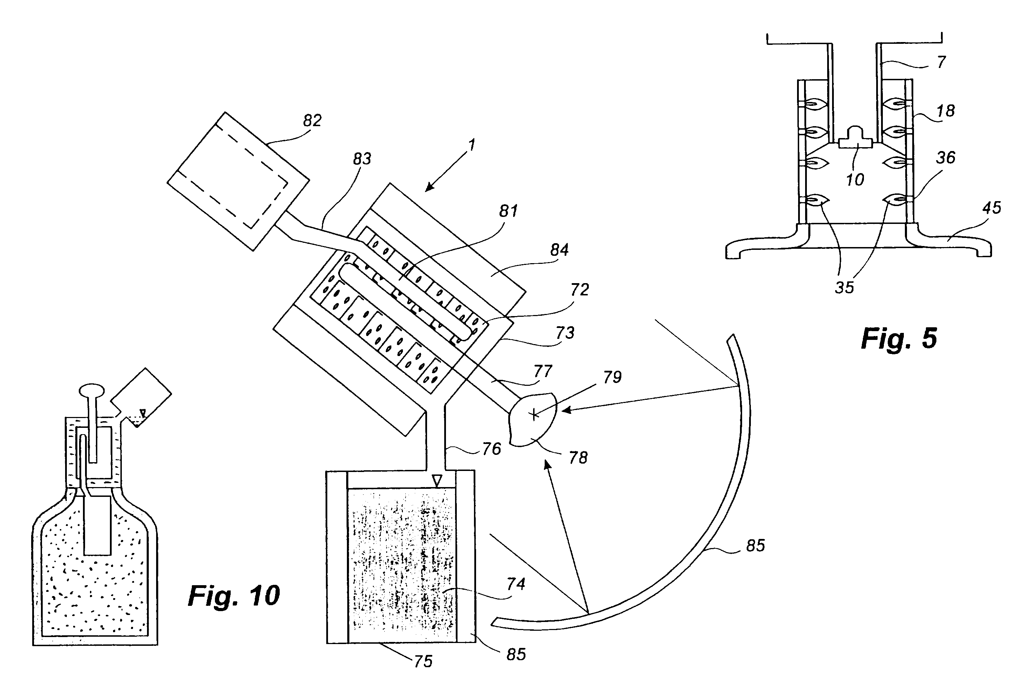

Eine bevorzugte Ausführungsform des Brennerbereichs ist in der Fig. 5 dargestellt, wobei das Brennerrohr mehrere auf seinen Umfang verteilte Öffnungen 36 aufweist, durch welche Luft zum inneren Bereich des Brennerrohrs 18 zugeführt wird und viele kleine Flammen entstehen. Der Vorteil besteht darin, daß keine unmittelbare Berührung der Flamme mit dem rohrförmigen kalten Beheizungskörper stattfindet, so daß eine saubere Verbrennung gewährleistet ist.

Wie aus der Fig. 3 entnehmbar ist, strömen die heißen Abgase 37 an der Oberfläche 8 des Zylinderkörpers 2 entlang durch den Schlitz 38, der zwischen dem Windschutz 14 und dem Zylinderkörper 2 ausgebildet ist. Der Zylinderkörper wird daher von den heißen Abgasen umspült, so daß eine gute Wärmeübertragung auf das sorptionsfähige Material 6 gewährleistet ist.

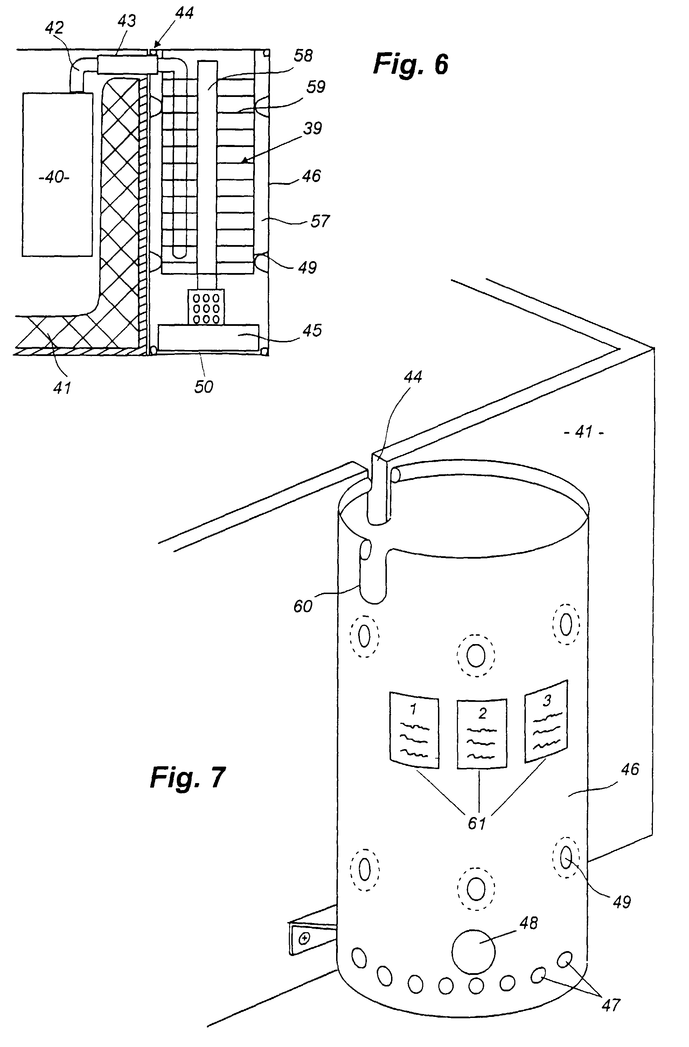

Bei dem in Fig. 6 gezeigten Ausführungsbeispiel befinden sich Zylinderkörper 39 und Verdampfer 40 in der Kühlphasenposition, wobei der Verdampfer 40 in eine Kühlbox 41 eingehängt ist. Die Verbindungsleitung 42 ist mit einer Isolation 43 versehen, welche den Schlitz 44 in der Wandung der Kühlbox 41 abdichtet. Gleichzeitig dient die Verbindungsleitung 42 auch als Haltegriff, mit welchem die Einheit aus Zylinderkörper 39 und Verdampfer 40 aus der in Fig. 6 gezeigten Stellung herausgehoben werden kann. Unterhalb des Zylinderkörpers 39 befindet sich das Heizelement 45, in diesem Fall z.B. ein Spiritusbrenner. Der Zylinderkörper 39 und das Heizelement 45 werden in einem dosenförmigen Gehäuse 46 aufgenommen, welches an der Außenseite der Kühlbox 41 fest montiert sein kann. Dieses Gehäuse besitzt in seinem unteren Bereich Luftlöcher 47 und ein Zündloch 48, durch welches der Spiritusbrenner gezündet werden kann. Einbuchtungen 49 in der Wandung des dosenförmigen Gehäuses 46 dienen als Zentrierungseinrichtungen, die den Zylinderkörper 39 auf Abstand zu der Gehäusewandung halten und ferner festklemmen.

Wie erkennbar ist, ist bei diesem Ausführungsbeispiel der Zylinderkühler 39 in einer permanent aufrechten Position angeordnet, und der Brenner 45 befindet sich unterhalb des Zylinderkörpers 39. Das Metallgehäuse 46 kann z.B. aus einem oder mehreren z.B. 0,6mm dünnen Edelstahlblechen hergestellt sein, wobei der Boden 50 in die Ränder des Gehäuses eingebördelt ist. In der Regenerationsphase, in welcher das Wasser aus dem Zeolith mittels der Flamme aus dem Heizelement ausgetrieben wird, strömt Verbrennungsluft durch die Luftlöcher 47 und die heißen Abgase strömen in dem Zwischenraum 51 zwischen dem Zylinderkörper 39 und der Wandung des Gehäuses 46 nach oben, so daß der Zylinderkörper, der an seiner Außenseite keine Wärmeisolierung aufweist, gleichmäßig erwärmt wird. Da die Wärme auch über den Beheizungskörper 58 im zentralen Bereich des Zylinderkörpers 39 zugeführt wird, verteilt sich die Wärme gleichmäßig, so daß keine Wärmeverluste entstehen. Durch das Entlangströmen der Abgase an der Außenseite wird zusätzliche Wärme von außen zugeführt, so daß eine sehr gute Wärmeverteilung über den Querschnitt des Zylinderkörpers 39 erzielt wird und der Wirkungsgrad der Regeneration verbessert wird.

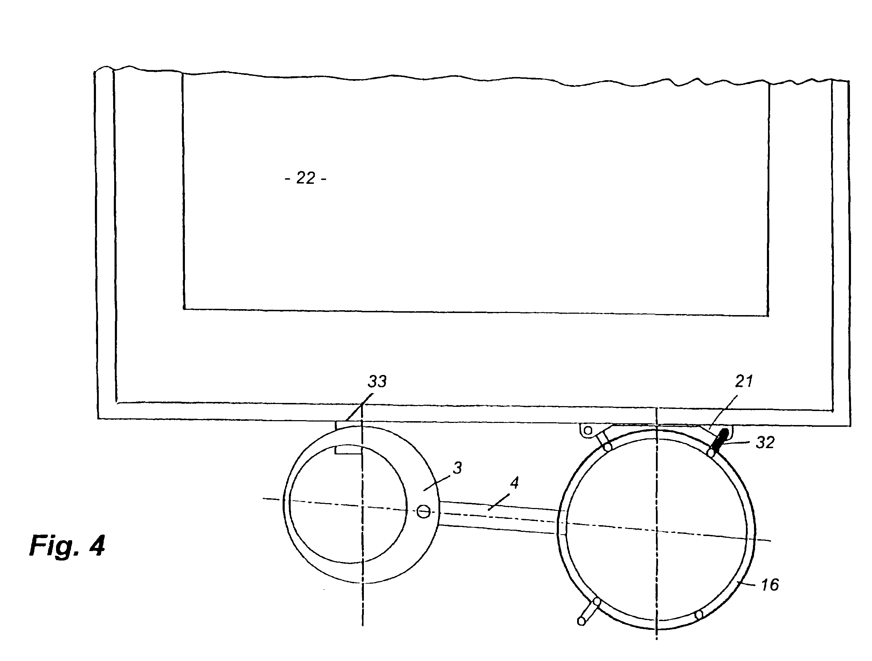

In der Kühlphase, bei der das Heizelement 45 ausgestellt ist, wird durch die Absorption des Wassers in Zeolith Wärme erzeugt, die über die Rippen 59, welche den zentralen Beheizungskörper 58 ringförmig umschließen, gleichmäßig verteilt und es wird an der Außenseite eine Luftströmung nach oben erzeugt, da Kühlluft als Umgebungsluft durch die Luftlöcher 47 unten zugeführt wird und oben an der offenen Seite des Gehäuses 46 entweichen kann. Im Gegensatz zu dem Ausführungsbeispiel nach den Fig. 1 bis 4 muß bei dem Ausführungsbeispiel nach der Fig. 6 die Vorrichtung in der Regenerationsphase, in welcher sich der Verdampfer außerhalb der Box befindet, nicht mehr um 180° gewendet werden. Deswegen ist am oberen Rand des Metallgehäuses 46 eine weitere Aussparung 60 vorgesehen, in welche die Verbindungsleitung 42 eingehängt werden kann.

In der Fig. 7 ist ferner gezeigt, daß auf der Außenseite des Metallgehäuses 46 Gebrauchsanweisungen für die Behandlungsstufen 61 vorgesehen sein können.

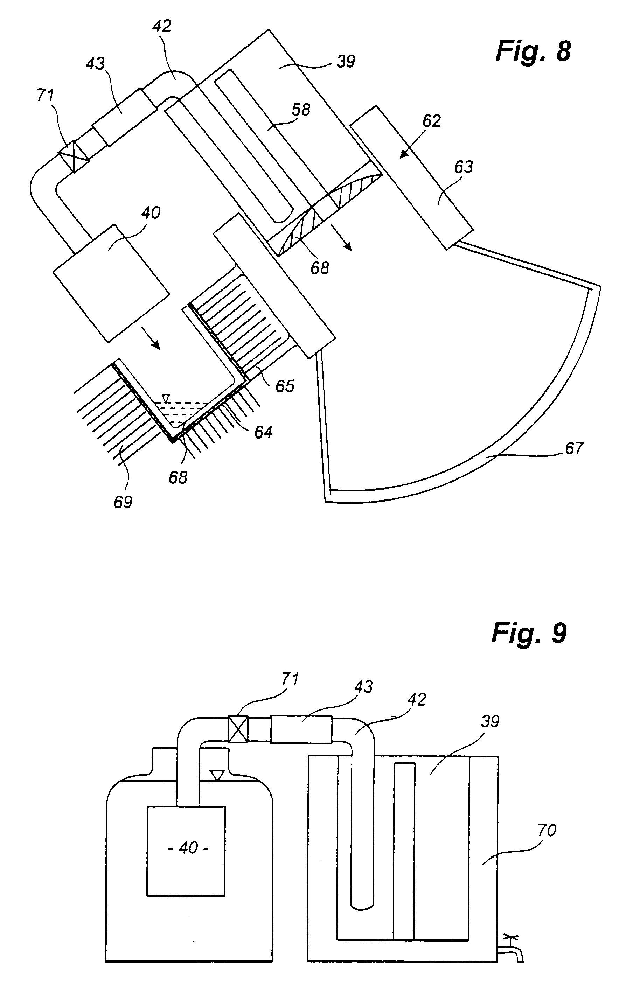

Die in der Fig. 6 gezeigte Vorrichtung kann beispielsweise in eine in Fig. 8 gezeigte Rengerationsvorrichtung 62 eingesetzt werden. Diese Regenerationsvorrichtung besitzt einen wärmeisolierten Gehäuseteil 63 für den Zylinderkörper 39 und einen kühlbaren Gehäuseteil 64 für den Verdampfer 40. Beide Gehäuseteile sind über Streben 65 fest miteinander verbunden. Am unteren Ende des Beheizungskörpers 58 befindet sich eine verbreiterte Kupferplatte 66, welche die von einem Parabolspiegel 67 konzentrierte Strahlungsenergie der Sonne aufnimmt. Diese Kupferplatte ist flach ausgebildet, so daß sie beispielsweise auch auf eine Kochplatte eines Herdes aufgesetzt werden kann.

Der Kondensator/Verdampfer 40 wird in den Gehäuseteil 64 eingesetzt, dessen Durchmesser etwas größer als der Kondensator/Verdampfer ist, so daß er leicht in den Gehäuseteil einschiebbar ist und gegebenenfalls ein Zwischenraum entsteht, der z.B. mit Kühlwasser 68 füllbar ist. An seiner Außenseite besitzt der Gehäuseteil 64 Kühlrippen 69.

In der Fig. 9 ist die Kühlphase der in der Fig. 8 regenerierten Vorrichtung gezeigt, wobei der Verdampfer 40 in eine Milchkanne eingehängt ist, während der Zylinderkörper 39 in eine Wasserbehälter 70 eingehängt ist, so daß die bei der Adsorption von Wasser im Zeolith entstehende Wärme zur Aufwärmung von Brauchwasser dient, was z.B. zum Waschen von Milchkannen verwendet werden kann. Das in der Leitung 42 vorgesehene Ventil 71 kann manuell bedienbar sein und die Verbindung zwischen dem Verdampfer und dem Zylinderkörper 39 unterbrechen, so daß auch die Kühlphase unterbrochen wird.

Gemäß einem weiteren vorteilhaften in Fig. 10 gezeigten Ausführungsbeispiel kann der Zylinderkörper 72 statt der Isolierung von einem Gehäuse 73 umschlosssen sein, welches evakuiert ist und mit einem Kühlmedium, zum Beispiel Wasser 74 befüllbar ist. Dieses Wasser 74 befindet sich in einem Vorratsbehälter 75, welcher über eine Leitung 76 mit dem Gehäuse 73 in Verbindung steht. Der Beheizungskörper 77 weist an seinem freien, aus dem Zylinderkörper 72 herausragenden Ende eine kugelkalottenförmige Verdickung 78 auf, die im Brennpunkt 79 eines Parabolspiegels 80 angeordnet wird, wenn das Sorptions-Kühlaggregat 1 seine Regenerationsstellung einnimmt. Der Zylinderkörper 72 ist über das Rohr 81 mit dem Verdampfer 82 verbunden, der z.B. in der aktiven Kühlphase in eine isolierte Milchkanne eingesetzt werden kann, wobei der Zylinderkörper 72 und das Gehäuse 73 die Milchkanne nach obenhin verschließen. Ähnlich wie bei dem gemäß Fig. 1 beschriebenen Ausführungsbeispiel kann natürlich der Verdampfer 82 mit einer Ventileinrichtung versehen sein, welche die Verbindungsleitung 83 automatisch verschließt, sobald der Dampfdruck in dieser Leitung unter einen bestimmten Wert fällt.

Sowohl das Gehäuse 73 als auch der Vorratsbehälter 75 können an ihrer Außenseite Kühlrippen 84, 85 aufweisen, die entweder als flache Elemente auf die Außenseite der Behälter aufgesetzt oder hohl ausgebildet sind, so daß das Kühlmedium 74 in die Kühlrippen von innen einströmen kann.

Im nachfolgenden soll die Funktionsweise der erfindungsgemäßen Vorrichtung beschrieben werden. In der Fig. 1 ist die aktive Kühlphase dargestellt, in welcher sich im Verdampfer 3 Wasser befindet. Wird das Ventil 27 geöffnet, saugt das sich in dem Zylinderkörper 2 befindliche Zeolith die Feuchtigkeit aus der mit Dampf gesättigten Leitung 4 auf und erzeugt dabei in der Leitung einen niedrigen Druck, der die in dem Verdampfer 3 befindliche Flüssigkeit verdampfen läßt und gegebenenfalls bei niedriger Temperatur zum Kochen bringt. Dabei kühlt sich der Verdampfer 3 ab, so daß der Umgebung in der Kühlbox 22 Wärme entzogen wird. Der Dampf wird vom dem Zeolith aufgenommen, wobei sich das Zeolith erwärmt. Zu diesem Zweck muß dafür gesorgt werden, daß die Erwärmungstemperatur des Zeolith nicht zu hoch wird, da andernfalls der Wirkungsgrad der Dampfaufnahme verringert werden würde. Zur Kühlung dient der aus dem Zylinderkörper 2 herausragende Abschnitt 9 des Beheizungskörpers 7 mit der durch das Brennerrohr 18 vergrößerten Oberfläche, wobei dieser Abschnitt von Umgebungsluft umspült wird.

Kommt die Kühlung durch die nahezu vollständige Adsorption des Wasserdampfes im Zeolith 6 nahezu zum Stillstand, muß die Vorrichtung regeneriert werden. Zu diesem Zweck wird sie - wie dies in Fig. 3 gezeigt ist - aus der Kühlbox entnommen und um 180° gedreht und dann auf die Brenneraufnahme 13 des Spiritusbrenners 34 aufgesetzt. Durch Beheizung des Brennerrohres mit einer geeigneten Heizquelle wird nun das in dem Zeolith 6 aufgenommene Wasser ausgetrieben und gelangt durch die Schlitze 24 im Rohr 23 und über die Verbindungsleitung wieder in den Verdampfer 3, der in diesem Falle als Kondensator wirkt. Dabei ist das Ventil 27 zunächst geschlossen, bis die Federkraft des Edelstahlbalges durch den in der Verbindungsleitung 4 aufgebauten Dampfdruck überwunden wird.

Die im Beheizungskörper 7 vorgesehene Wassermenge wird bei zunehmender Erwärmung des Zeoliths 6 in der aktiven Kühlphase gemäß Fig. 1 verdampft, so daß der Dampf in den Abschnitt 9 steigt und infolge der Berührung mit der kalten Außenwand des Abschnitts 9 kondensiert und in Form von Wasser an der Innenwand des Rohres 7 wieder nach unten strömt, wobei das Zeolith auf diese Weise auf einem geringeren Temperaturniveau gehalten werden kann.

Bei der Austreibungsphase gemäß Fig. 3 sorgt dagegen der bei der Beheizung erzeugte und nach oben steigende Wasserdampf für eine günstige Wärmeverteilung auf das Zeolith 6, so daß das Wasser aus dem Zeolith 6 gleichmäßig ausgetrieben wird.

Ist schließlich die Austreibungsphase gemäß Fig. 3 beendet, so ist es zweckmäßig das Sorberteil und Verdampferteil abzukühlen, damit es für die nachfolgende aktive Kühlphase wieder die niedrigen Ausgangstemperaturen aufweist. Zu diesem Zweck können beide Teile in ein Kühlmittel, zum Beispiel Seewasser, eingetaucht werden, wobei das Ringelement 16 als Griff dienen kann. Dieses hat sich während der Austreibungsphase kaum erhitzt, da es in einem größeren Abstand zur Flamme des Brenners angeordnet ist. Beim Eintauchen des Zylinderkörpers in Seewasser kühlt sich der Abschnitt 9 des Rohres 7 sehr stark ab, so daß der im Rohr 7 befindliche Dampf kondensiert und an der Innenwand des Rohres 7 nach unten strömt, wobei die niedrige Temperatur an das Zeolith über die Wärmeleitbleche 25 gleichmäßig abgegeben wird, bis das kondensierte Wasser im unteren Bereich durch Wärmeaufnahme vom Zeolith wieder verdampft und nach oben steigt, so daß sich der Vorgang wiederholt.

Da der Verdampfer 3 durch das Ventil 27 gegenüber dem Sorberteil 2 verschlossen ist, bleibt das kondensierte Wasser in dem Verdampfer 3 zurück, so daß die Vorrichtung ohne Funktionsweise für einen längeren Zeitraum gelagert werden kann. Soll sie dann in Betrieb genonunen werden, kann-das Ventil 27 von Hand geöffnet werden, so daß der Kreislauf von vorne beginnt.

### Bezugszeichenliste

- 1: Sorptions-Kühlaggregat
- 2: Sorberteil, Zylinderkörper
- 3: Verdampferteil
- 4: Verbindungsleitung
- 5: Isolierung
- 6: Zeolith
- 7: Beheizungskörper
- 8: Deckenstirnfläche
- 9: Abschnitt
- 10: Verschluß
- 11: Füllnippel
- 12: Wasser
- 13: Brenneraufnahme
- 14: Windschutz
- 15: Halterung
- 16: Ringelement
- 17: Stütze
- 18: Brennerrohr
- 19: Rippe
- 20: Befestigungselement
- 21: Öse
- 22: Kühlbox
- 23: Rohr
- 24: Öffnung
- 25: Wärmeleitblech
- 26: Stutzen
- 27: Ventil
- 28: Ventilstange
- 29: Feder
- 30: Durchgangsbohrung
- 31: Deckel
- 32: Haken
- 33: Halterung
- 34: Brenner
- 35: Flamme
- 36: Öffnung
- 37: Abgase
- 38: Schlitz
- 39: Zylinderkörper
- 40: Verdampfer
- 41: Kühlbox
- 42: Verbindungsleitung
- 43: Isolation
- 44: Schlitz
- 45: Heizelement
- 46: Gehäuse
- 47: Luftloch
- 48: Zündloch
- 49: Einbuchtung
- 50: Boden
- 57: Zwischenraum
- 58: Beheizungskörper
- 59: Rippen
- 60: Aussparung
- 61: Gebrauchsanweisung
- 62: Regenerationsvorrichtung
- 63: Gehäuseteil
- 64: Gehäuseteil
- 65: Strebe
- 66: Kupferplatte
- 67: Parabolspiegel
- 68: Kühlwasser
- 69: Kühlrippen
- 70: Wasserbehälter
- 71: Ventil
- 72: Zylinderkörper
- 73: Gehäuse
- 74: Wasser
- 75: Vorratsbehälter
- 76: Leitung
- 77: Beheizungskörper
- 78: Verdickung
- 79: Brennpunkt
- 80: Parabolspiegel
- 81: Rohr
- 82: Verdampfer
- 83: Verbindungsleitung
- 84: Kühlrippe
- 85: Kühlrippe

## Patentansprüche

1. Sorptions-Kühlaggregat, insbesondere für eine Kühlbox, mit einem beheizbaren Sorberteil, das mit einem sorptionsfähigen Material gefüllt ist, welches bei Normaltemperatur ein Fluid sorbiert und dieses bei Erwärmung wieder abgibt, wobei das Sorberteil von einem mit dem sorptionsfähigen Material gefüllten Körper (2, 39, 72) gebildet ist, der von einem im wesentlichen aufrecht angeordneten Beheizungskörper (7, 77) durchgriffen ist, welcher einen in der Regenerationsphase zum Beheizen und in der Abkühlphase zumindest teilweise zum Abkühlen dienenden Abschnitt (9, 78) aufweist, und daß der Innenraum des Sorberteils über eine Leitung (4) mit einem Verdampferteil (3) verbunden ist, **dadurch gekennzeichnet, daß** der in der Regenerationsphase zum Beheizen und in der Abkühlphase zumindest teilweise zum Abkühlen dienende Abschnitt aus dem Sorberteil vorsteht.

2. Sorptions-Kühlaggregat nach Anspruch 1, **dadurch gekennzeichnet, daß** der Körper (2) des Sorberteils ein im wesentlichen aufrecht stehender und allseitig geschlossener Zylinderkörper ist.

3. Sorptions-Kühlaggregat nach einem der vorhergehenden Ansprüche, **dadurch gekennzeichnet, daß** das Sorberteil und das Verdampferteil (3) eine starre mobile Baueinheit bilden, welche mit dem Verdampferteil in eine Kühlbox (22) einhängbar ist.

4. Sorptions-Kühlaggregat nach einem der vorhergehenden Ansprüche 2 oder 3, **dadurch gekennzeichnet, daß** der Körper (2) an seiner Zylinderfläche und dem Boden eine Wärmeisolierung (5) aufweist.

5. Sorptions-Kühlaggregat nach einem der vorhergehenden Ansprüche 2-4, **dadurch gekennzeichnet, daß** der Zylinderkörper (2) an seiner Oberseite (8) eine als Griff- bzw. Stützeinrichtung dienende Halterung (15) aufweist.

6. Sorptions-Kühlaggregat nach Anspruch 5, **dadurch gekennzeichnet, daß** die Halterung (15) ein konzentrisch zu der Zylinderachse angeordnetes Teil, insbesondere ein Ringelement (16) aufweist, welches mittels Stützen (17) am Zylinderkörper (2) befestigt ist und den aus dem Zylinderkörper vorhergehenden Abschnitt (9) des Beheizungskörpers (7) umschließt.

7. Sorptions-Kühlaggregat nach Anspruch 6, **dadurch gekennzeichnet, daß** eine Brennerhalterung (13) vorgesehen ist und das Ringelement (16) in seiner Stützfunktion in die Brennerhalterung (13) einsetzbar ist.

8. Sorptions-Kühlaggregat nach Anspruch 7, **dadurch gekennzeichnet, daß** die Brennerhalterung (13) einen konzentrisch zum Zylinderkörper (2) des Sorberteils angeordneten und bis nahe an die Stirnseite des Zylinderkörpers greifenden Windschutz (14) aufweist.

9. Sorptions-Kühlaggregat nach einem der vorhergehenden Ansprüche 2-8, **dadurch gekennzeichnet, daß** an der Außenseite des Zylinderkörpers (2) Befestigungselemente (20, 21, 32), insbesondere Haken, zur Halterung des Sorberteils (2) an der Außenseite der Kühlbox (22) vorgesehen sind.

10. Sorptions-Kühlaggregat nach einem der vorhergehenden Ansprüche 2-9, **dadurch gekennzeichnet, daß** der Beheizungskörper (7) von einem zentrisch im Zylinderkörper (2) angeordneten und sich über seine Länge erstreckenden, geschlossenen Rohr gebildet ist, das evakuiert und teilweise mit einer Flüssigkeit (12) gefüllt ist.

11. Sorptions-Kühlaggregat nach Anspruch 10, **dadurch gekennzeichnet, daß** das Rohr (7) an seinem freien Ende einen verschließbaren Einfüllstutzen (10, 11) aufweist.

12. Sorptions-Kühlaggregat nach einem der vorhergehenden Ansprüche, **dadurch gekennzeichnet, daß** das freie Ende des Beheizungskörpers (7) von einem Brennerrohr (18) größeren Durchmessers umgeben ist, welches mittels Wärmeleitrippen (19) am Rohr des Beheizungskörpers (7) abgestützt ist.

13. Sorptions-Kühlaggregat nach Anspruch 12, **dadurch gekennzeichnet, daß** in der Wandung des Brennerrohres (18) Bohrungen (36) abgestufter Größe vorgesehen sind und daß die Flamme eines Heizelementes (34) im wesentlichen von der Außenseite des Brennerrohres (18) mit Sauerstoff versorgt wird.

14. Sorptions-Kühlaggregat nach einem der vorhergehenden Ansprüche 1 bis 4, **dadurch gekennzeichnet, daß** ein dosenförmiges, an seiner oberen Seite offenes Gehäuse (46) vorgesehen ist, in welches der Körper (39) einhängbar ist, derart, daß er von gegenüber der Dosenwand vorstehenden Zentrierungseinrichtungen (49) zur Dosenwand und zum Dosenboden (50) auf Abstand gehalten wird.

15. Sorptions-Kühlaggregat nach Anspruch 14, **dadurch gekennzeichnet, daß** unterhalb des Körpers (39) in dem dosenförmigen Gehäuse (46) ein Heizelement (45) angeordnet ist.

16. Sorptions-Kühlaggregat nach einem der vorhergehenden Ansprüche 14 und 15, **dadurch gekennzeichnet, daß** im unteren Bereich des dosenförmigen Gehäuses (46) Lufteintrittslöcher (47) und wenigstens ein Zündloch (48) für ein entflammbares Heizelement (45) vorgesehen sind.

17. Sorptions-Kühlaggregat nach Anspruch 14, **dadurch gekennzeichnet, daß** die Zentriereinrichtungen von in der Gehäusewand angeordneten Einbuchtungen (49) gebildet sind, zwischen denen der Körper (39) klemmend gehalten wird.

18. Sorptions-Kühlaggregat nach einem der vorhergehenden Ansprüche, **dadurch gekennzeichnet, daß** der in der Regenerationsphase zum Beheizen und in der Abkühlphase zumindest teilweise zum Abkühlen dienende Abschnitt (78) des Beheizungskörpers (77) zur Aufnahme von Strahlungswärme verbreitert, insbesondere kugelkalottenförmig ausgebildet ist.

19. Sorptions-Kühlaggregat nach einem der vorhergehenden Ansprüche, **dadurch gekennzeichnet, daß** in dem sorptionsfähigen Material Wärmeleiteinrichtungen (25), insbesondere den Beheizungskörper (7, 77) konzentrisch umschließende, Wärmeleitbleche vorgesehen sind.

20. Sorptions-Kühlaggregat nach Anspruch 19, **dadurch gekennzeichnet, daß** die Wärmeleitbleche (25) eine Wärmebrücke zwischen dem Beheizungskörper (7) und dem Körper (2) bilden.

21. Sorptions-Kühlaggregat nach einem der vorhergehenden Ansprüche, **dadurch gekennzeichnet, daß** die Verbindungsleitung (4) zwischen dem Körper (2) und dem Verdampferteil (3) von einem Rohr gebildet ist, welches zylinderseitig achsparallel zu dem Beheizungskörper (7) angeordnet ist und Öffnungen zur Durchleitung der sorbierbaren Flüssigkeit aufweist und welches verdampferseitig durch ein Ventil (27) verschließbar ist.

22. Sorptions-Kühlaggregat nach Anspruch 21, **dadurch gekennzeichnet, daß** das Ventil (27) in seinem Schließzustand durch eine Ventilbetätigungseinrichtung feder- und/oder druckbelastet ist.

23. Sorptions-Kühlaggregat nach Anspruch 21 und 22, **dadurch gekennzeichnet, daß** das Ventil (27) von dem während der Regenerationsphase erzeugten Dampfdruck entgegen der Federkraft und/oder der Druckkraft der Ventilbetätigungseinrichtung, insbesondere gegen die Kraft des Umgebungsluftdruckes geöffnet werden kann.

24. Sorptions-Kühlaggregat nach einem der vorhergehenden Ansprüche, **dadurch gekennzeichnet, daß** die Ventilbetätigungseinrichtung (29) von einem Edelstahlbalg gebildet ist, der an seiner einen Seite von dem in der Verbindungsleitung (4) herrschenden Druck und auf seiner anderen Seite von dem Umgebungsluftdruck beaufschlagt ist.

25. Sorptions-Kühlaggregat nach Anspruch 21, **dadurch gekennzeichnet, daß** das Ventil (27) von Hand verstellbar ist.

26. Sorptions-Kühlaggregat nach einem der vorhergehenden Ansprüche, **dadurch gekennzeichnet, daß** das Verdampferteil (3, 82) zur Vergrößerung der Oberfläche eine achsparallele Durchgangsbohrung (30) aufweist.

27. Sorptions-Kühlaggregat nach einem der vorhergehenden Ansprüche 1 bis 3, **dadurch gekennzeichnet, daß** für den Körper (2) und den Verdampfer (40) eine Regenerationsvorrichtung (62) vorgesehen ist, die einen wärmeisolierten Gehäuseteil (63) für den Körper und einen kühlbaren Gehäuseteil (64) für den Verdampfer ausweist.

28. Sorptions-Kühlaggregat nach Anspruch 27, **dadurch gekennzeichnet, daß** der wärmeisolierte Gehäuseteil (63) an seinem unteren Ende ein Heizelement (67) zum Beheizen des Beheizungskörpers (7) aufweist.

29. Sorptions-Kühlaggregat nach Anspruch 27, **dadurch gekennzeichnet, daß** der kühlbare Gehäuseteil (64) mit einem den Verdampfer umschliessenden Kühlmittel befüllbar ist und/oder an seiner Außenseite Kühlrippen (69) aufweist.

30. Sorptions-Kühlaggregat nach einem der vorhergehenden Ansprüche 1 bis 26, **dadurch gekennzeichnet, daß** der Körper (72) an seiner Außenseite von einem geschlossenen Gehäuse (73) umgeben ist und daß ein Hohlraum zwischen Körper (72) und Gehäuse (73) mit einem Kühlmedium (74) befüllbar ist.

31. Sorptions-Kühlaggregat nach Anspruch 30, **dadurch gekennzeichnet,** daß das Gehäuse (73) mit einem zur Aufnahme des Kühlmediums (74) dienenden Vorratsbehälter (75) verbunden ist.

32. Sorptions-Kühlaggregat nach Anspruch 31, **dadurch gekennzeichnet,** daß der Vorratsbehälter (75) derart am Gehäuse (73) angeordnet ist, daß das Kühlmedium (74) unter dem Einfluß der Schwerkraft in der Regenerationsphase aus dem Gehäuse in den Vorratsbehälter entweicht bzw. in der aktiven Kühlphase aus dem Vorratsbehälter in das Gehäuse einströmt.

33. Sorptions-Kühlaggregat nach einem der vorhergehenden Ansprüche 30 bis 32, **dadurch gekennzeichnet,** daß an der Außenseite des Gehäuses (73) und/oder des Vorratsbehälters (75) Kühlrippen (84, 85) angeordnet sind.

34. Sorptions-Kühlaggregat nach Anspruch 33, **dadurch gekennzeichnet,** daß die Kühlrippen (84, 85) hohl ausgebildet sind und von dem Kühlmedium (74) durchströmt werden können.

35. Sorptionskühlaggregat nach einem der Ansprüche 1 bis 27 oder 29 bis 34, **dadurch gekennzeichnet,** daß das Kühlaggregat ein Heizelement zum Beheizen des Beheizungskörpers aufweist.

36. Sorptions-Kühlaggregat nach Anspruch 28 oder 35, **dadurch gekennzeichnet,** daß das Heizelement ein mit festem, flüssigem oder gasförmigem Brennstoff betriebener Brenner ist.

37. Sorptions-Kühlaggregat nach Anspruch 28 oder 35, **dadurch gekennzeichnet,** daß das Heizelement mit Solarenergie betrieben wird und insbesondere einen auf den aus dem Sorberteil vorhergehenden Abschnitt des Beheizungskörpers ausrichtbaren Parabolspiegel aufweist.

## Claims

1. Sorption cooling unit, especially for a cooling box, having a heatable sorber portion which is filled with a sorbent material which, at normal temperature, sorbs a fluid and, when heated, releases it again, the sorber portion being formed by a body (2, 39, 72) which is filled with the sorbent material and through which extends a substantially upright heating body (7, 77) which has a portion (9, 78) which, in the regeneration phase, is used for heating and, in the cooling phase, is used at least partly for cooling, and in that the inner space of the sorber portion is connected by a line (4) to an evaporator portion (3), characterised in that the portion which, in the regeneration phase, is used for heating and, in the cooling phase, is used at least partly for cooling projects from the sorber portion.

2. Sorption cooling unit according to claim 1, characterised in that the body (2) of the sorber portion is a substantially upright cylindrical body which is closed on all sides.

3. Sorption cooling unit according to either of the preceding claims, characterised in that the sorber portion and the evaporator portion (3) form a rigid mobile structural unit which is suspendable with the evaporator portion in a cooling box (22).

4. Sorption cooling unit according to either of the preceding claims 2 and 3, characterised in that the body (2) has heat insulation (5) on its cylindrical face and on the base.

5. Sorption cooling unit according to any one of the preceding claims 2 to 4, characterised in that the cylindrical body (2) has, on its upper side (8), a holder (15) which is used as a gripping or supporting device.

6. Sorption cooling unit according to claim 5, characterised in that the holder (15) has a component, especially an annular element (16), which is arranged concentrically with the axis of the cylinder and which is secured to the cylindrical body (2) by means of supports (17) and surrounds that portion (9) of the heating body (7) which projects from the cylindrical body.

7. Sorption cooling unit according to claim 6, characterised in that a burner holder (13) is provided and the annular element (16) is insertable, in its function as a support, into the burner holder (13).

8. Sorption cooling unit according to claim 7, characterised in that the burner holder (13) has a wind break (14) which is arranged concentrically with the cylindrical body (2) of the sorber portion and which extends almost up to the end face of the cylindrical body.

9. Sorption cooling unit according to any one of the preceding claims 2 to 8, characterised in that securing elements (20, 21, 32), especially hooks, for holding the sorber portion (2) on the outer side of the cooling box (22) are provided on the outer side of the cylindrical body (2).

10. Sorption cooling unit according to any one of the preceding claims 2 to 9, characterised in that the heating body (7) is formed by a closed tube,. arranged centrally in the cylindrical body (2) and extending over the length thereof, which is evacuated and partially filled with a fluid (12).

11. Sorption cooling unit according to claim 10, characterised in that the tube (7) has a closable filler neck (10, 11) at its free end.

12. Sorption cooling unit according to any one of the preceding claims, characterised in that the free end of the heating body (7) is surrounded by a burner tube (18) of relatively large diameter which is supported on the tube of the heating body (7) by means of heat-conductive ribs (19).

13. Sorption cooling unit according to claim 12, characterised in that drilled holes (36) of graduated size are provided in the wall of the burner tube (18) and in that the flame of a heating element (34) is supplied with oxygen substantially from the outside of the burner tube (18).

14. Sorption cooling unit according to any one of the preceding claims 1 to 4, characterised in that a can-like housing (46) which is open at its upper side is provided in which the body (39) is suspendable in such a manner that it is maintained at a distance from the can wall and the can base (50) by centring devices (49) projecting relative to the can wall.

15. Sorption cooling unit according to claim 14, characterised in that a heating element (45) is arranged beneath the body (39) in the can-like housing (4.6).

16. Sorption cooling unit according to either of the preceding claims 14 and 15, characterised in that air inlet holes (47) and at least one ignition hole (48) for an ignitable heating element (45) are provided in the lower region of the can-like housing (46).

17. Sorption cooling unit according to claim 14, characterised in that the centring devices are formed by indents (49) which are arranged in the housing wall and between which the body (39) is clamped.

18. Sorption cooling unit according to any one of the preceding claims, characterised in that that portion (78) of the heating body (77) which, in the regeneration phase, is used for heating and, in the cooling phase, is used at least partly for cooling is in a widened form, especially in the form of a segment of a sphere, in order to absorb radiant heat.

19. Sorption cooling unit according to any one of the preceding claims, characterised in that heat-conductive devices (25), especially heat-conductive metal sheets which surround the heating body (7, 77) concentrically, are provided in the sorbent material.

20. Sorption cooling unit according to claim 19, characterised in that the heat-conductive metal sheets (25) form a heat bridge between the heating body (7) and the body (2).

21. Sorption cooling unit according. to any one of the preceding claims, characterised in that the connecting line (4) between the body (2) and the evaporator portion (3) is formed by a tube which, on the cylinder side, is arranged axially parallel with the heating body (7) and has openings for the passage of the sorbable fluid and which, on the evaporator side, is closable by a valve (27).

22. Sorption cooling unit according to claim 21, characterised in that the valve (27) is, in its closing state, spring- and/or pressure-loaded by a valve-operating device.

23. Sorption cooling unit according to claims 21 and 22, characterised in that the valve (27) can be opened, by the vapour pressure generated during the regeneration phase, against the spring force and/or the pressure force of the valve-operating device, especially against the force of the ambient air pressure.

24. Sorption cooling unit according to any one of the preceding claims, characterised in that the valve-operating device (29) is formed by a high-grade steel bellows which is acted upon, on its one side, by the pressure prevailing in the connecting line (4) and, on its other side, by the ambient air pressure.

25. Sorption cooling unit according to claim 21, characterised in that the valve (27) is adjustable by hand.

26. Sorption cooling unit according to any one of the preceding claims, characterised in that the evaporator portion (3, 82) has an axially parallel through-bore (30) for enlarging the surface.

27. Sorption cooling unit according to any one of the preceding claims 1 to 3, characterised in that there is provided for the body (2) and the evaporator (40) a regeneration device (62) which has a heat-insulated housing portion (63) for the body and a coolable housing portion (64) for the evaporator.

28. Sorption cooling unit according to claim 27, characterised in that the heat-insulated housing portion (63) has, at its lower end, a heating element (67) for heating the heating body (7).

29. Sorption cooling unit according to claim 27, characterised in that the coolable housing portion (64) is fillable with a cooling agent surrounding the evaporator and/or has cooling ribs (69) on its outer side.

30. Sorption cooling unit according to any one of the preceding claims 1 to 26, characterised in that the body (72) is surrounded, on its outer side, by a closed housing (73) and in that a cavity between the body (72) and the housing (73) is fillable with a cooling medium (74).

31. Sorption cooling unit according to claim 30, characterised in that the housing (73) is connected to a supply container (75) used for accommodating the cooling medium (74).

32. Sorption cooling unit according to claim 31, characterised in that the supply container (75) is arranged on the housing (73) in such a manner that the cooling medium (74), under the effect of gravity, escapes from the housing into the supply container in the regeneration phase or, in the active cooling phase, streams from the supply container into the housing.

33. Sorption cooling unit according to any one of the preceding claims 30 to 32, characterised in that cooling ribs (84, 85) are arranged on the outer side of the housing (73) and/or of the supply container (75).

34. Sorption cooling unit according to claim 33, characterised in that the cooling ribs (84, 85) are hollow and the cooling medium (74) can flow through them.

35. Sorption cooling unit according to any one of claims 1 to 27 or 29 to 34, characterised in that the cooling unit has a heating element for heating the heating body.

36. Sorption cooling unit according to claim 28 or 35, characterised in that the heating element is a burner operated with solid, liquid or gaseous fuel.

37. Sorption cooling unit according to claim 28 or 35, characterised in that the heating element is operated with solar energy and has, especially, a parabolic mirror alignable with that portion of the heating body which projects from the sorber portion.

## Revendications

1. Unité de réfrigération par sorption, en particulier pour une boîte de réfrigération, comportant une partie sorbante chauffante, remplie d'un matériau sorbant qui capte un fluide à la température normale et le restitue quanr il est chauffé, la partie sorbante étant formée d'un corps (2, 39, 72) rempli du matériau sorbant et traversé par un corps de chauffe (7, 77) placé pour l'essentiel debout, qui comporte une partie (9, 78) servant à chauffer dans la phase de régénération et à refroidir au moins partiellement dans la phase de refroidissement, et en ce que l'intérieur de la partie sorbante est relié à une partie évaporatrice (3) par une canalisation (4), **caractérisée en ce que la partie** servant à chauffer dans la phase de régénération et à refroidir au moins partiellement dans la phase de refroidissement est en saillie par rapport à la partie sorbante.

2. Unité de réfrigération par sorption selon la revendication 1, **caractérisée en ce que** le corps (2) de la partie sorbante est un corps cylindrique pour l'essentiel placé debout et fermé de tous côtés.

3. Unité de réfrigération par sorption selon l'une des revendications précédentes, **caractérisée en ce que** la partie sorbante et la partie évaporatrice (3) forment une unité modulaire mobile rigide qui peut être suspendue avec la partie évaporatrice dans une boîte de réfrigération (22).

4. Unité de réfrigération par sorption selon l'une des revendications 2 ou 3 précédentes, **caractérisée en ce que** le corps (2) comporte sur sa surface cylindrique et au fond une isolation thermique (5).

5. Unité de réfrigération par sorption selon l'une des revendications 2 à 4 précédentes, **caractérisée en ce que** le corps cylindrique (2) comporte à sa partie supérieure (8) une bride (15) servant de dispositif de saisie et de support.

6. Unité de réfrigération par sorption selon la revendication 5, **caractérisée en ce que** la bride (15) comporte une partie concentrique à l'axe du cylindre, en particulier un élément annulaire (16) qui est fixé au corps cylindrique (2) par des montants (17) et entoure la partie précédente (9) du corps de chauffe (7) qui dépasse du corps cylindrique.

7. Unité de réfrigération par sorption selon la revendication 6, **caractérisée en ce qu**'un support de brûleur (13) est prévu et que l'élément annulaire (16), dans sa fonction d'appui, peut être mis en place dans le support de brûleur (13).

8. Unité de réfrigération par sorption selon la revendication 7, **caractérisée en ce que** le support de brûleur (13) comporte un paravent (14) placé concentriquement au corps cylindrique (2) de la partie sorbante et s'étendant jusqu'au voisinage de la face du corps cylindrique.

9. Unité de réfrigération par sorption selon l'une des revendications 2 à 8 précédentes, **caractérisée en ce que,** sur la face externe du corps cylindrique (2), sont prévus des éléments de fixation (20, 21, 32), en particulier des crochets, pour le maintien de la partie sorbante (2) sur la face externe de la boîte de réfrigération (22).

10. Unité de réfrigération par sorption selon l'une des revendications 2 à 9 précédentes, **caractérisée en ce que** le corps de chauffe (7) est formé d'un tube fermé placé au centre dans le corps cylindrique (2) et s'étendant sur sa longueur, où est fait le vide et qui est partiellement rempli d'un liquide (12).

11. Unité de réfrigération par sorption selon la revendication 10, **caractérisée en ce que** le tube (7) comporte à son extrémité libre une tubulure de remplissage (10, 11) obturable.

12. Unité de réfrigération par sorption selon l'une des revendications précédentes, **caractérisée en ce que** l'extrémité libre du corps de chauffe (7) est entourée par un tube brûleur (18) de plus grand diamètre soutenu par des ailettes conductrices de la chaleur (19) sur le tube du corps de chauffe (7).

13. Unité de réfrigération par sorption selon la revendication 12, **caractérisée en ce que**, dans la paroi du tube brûleur (18), sont prévus des perçages (36) de dimension échelonnée et que la flamme d'un élément de chauffage (34) est alimentée pour l'essentiel en oxygène à partir de l'extérieur du tube brûleur (18).

14. Unité de réfrigération par sorption selon l'une des revendications 1 à 4 précéentes, **caractérisée en ce qu**'il est prévu un carter (46) en forme de boîte, ouvert sur sa face supérieure, dans lequel le corps (39) peut être suspendu de manière à être tenu écarté de la paroi de la boîte et du fond (50) de la boîte par des dispositifs de centrage (49) en saillie par rapport à la paroi de la boîte.

15. Unité de réfrigération par sorption selon la revendication 14, **caractérisée en ce qu**'un élément chauffant (45) est placé au-dessous du corps (39) dans le carter (46) en forme de boîte.

16. Unité de réfrigération par sorption selon l'une des revendications 14 et 15 précédentes, **caractérisée en ce que,** dans la zone inférieure du carter (46) en forme de boîte, sont prévus des trous d'arrivée d'air (47) et au moins un trou d'allumage (48) pour un élément de chauffage (45) inflammable.

17. Unité de réfrigération par sorption selon la revendication 14, **caractérisée en ce que** les dispositifs de centrage sont formés de dentelures (49) ménagées dans la paroi du carter, entre lesquelles le corps (39) est maintenu par serrage.

18. Unité de réfrigération par sorption selon l'une des revendications précédentes, **caractérisée en ce que** la partie (78) du corps de chauffe (77), servant à chauffer dans la phase de régénération et à refroidir au moins partiellement dans la phase de refroidissement, est élargie, en particulier sous forme de calotte sphérique, pour recevoir de la chaleur rayonnée.

19. Unité de réfrigération par sorption selon l'une des revendications précédentes, **caractérisée en ce que**, dans le matériau sorbant sont prévus des dispositifs conducteurs de la chaleur (25), en particulier des tôles conductrices de la chaleur entourant concentriquement le corps de chauffe (7, 77).

20. Unité de réfrigération par sorption selon la revendication 19, **caractérisée en ce que** les tôles conductrices de la chaleur (25) forment un pont thermique entre le corps de chauffe (7) et le corps (2).

21. Unité de réfrigération par sorption selon l'une des revendications précédentes, **caractérisée en ce que** la conduite de racccordement (4) entre le corps (2) et la partie évaporatrice (3) est formée d'un tube qui est disposé du côté du cylindre parallèlement à l'axe du corps de chauffe (7) et comporte des ouvertures pour le passage du liquide sorbant et qui peut être obturé du côté de l'évaporateur par une soupape (27).

22. Unité de réfrigération par sorption selon la revendication 21, **caractérisée en ce que** la soupape (27) est chargée dans son état fermé par ressort et/ou par pression par un dispositif de commande de soupape.

23. Unité de réfrigération par sorption selon les revendications 21 et 22, **caractérisée en ce que** la soupape (27) peut être ouverte par la pression de vapeur produite pendant la phase de régénération contre la force de ressort et/ou la force de pression du dispositif de commande de soupape, en particulier contre la force de la pression de l'air ambiant.

24. Unité de réfrigération par sorption selon l'une des revendications précédentes, **caractérisée en ce que** le dispositif de commande de soupape (29) est formé d'un soufflet en acier inoxydable qui, sur une de ses faces, est soumis à la pression régnant dans la conduite de raccordement (4) et, sur son autre face, à la pression de l'air ambiant.

25. Unité de réfrigération par sorption selon la revendication 21, **caractérisée en ce que** la soupape (27) peut être actionnée à la main.

26. Unité de réfrigération par sorption selon l'une des revendications précédentes, **caractérisée en ce que** la partie évaporatrice (3, 82) comporte un trou de passage (30) parallèle à l'axe pour agrandir la surface.

27. Unité de réfrigération par sorption selon l'une des revendications 1 à 3 précédentes, **caractérisée en ce qu**'il est prévu pour le corps (2) et l'évaporateur (40) un dispositif de régénération (62) qui comporte une partie en carter (63) isolée thermiquement pour le corps et une partie en carter (64) refroidissante pour l'évaporateur.

28. Unité de réfrigération par sorption selon la revendication 27, **caractérisée en ce que** la partie en carter (63) isolée thermiquement comporte à son extrémité inférieure un élément de chauffage (67) pour chauffer le corps de chauffe (7).

29. Unité de réfrigération par sorption selon la revendication 27, **caractérisée en ce que** la partie en carter (64) refroidissante peut être remplie d'un produit réfrigérant entourant l'évaporateur et/ou comporte sur sa face externe des ailettes de refroidissement (69).

30. Unité de réfrigération par sorption selon l'une des revendications 1 à 26 précédentes, **caractérisée en ce que** le corps de chauffe (72) est entouré sur sa face externe d'un carter (73) fermé et en ce qu'une cavité entre le corps (72) et le carter (73) peut être remplie d'un milieu réfrigérant (74).

31. Unité de réfrigération par sorption selon la revendication 30, **caractérisée en ce que** le carter (73) est relié à un réservoir (75) servant à recevoir le milieu réfrigérant (74).

32. Unité de réfrigération par sorption selon la revendication 31, **caractérisée en ce que** le réservoir (75) est fixé au carter (73) de telle manière que le milieu réfrigérant (74) se dégage, sous l'influence de la pesanteur, du carter dans le réservoir dans la phase de régénération et afflue du réservoir dans le carter dans la phase active de refroidissement.

33. Unité de réfrigération par sorption selon l'une des revendications 30 à 32 précédentes, **caractérisée en ce que** des ailettes de refroidissement (84, 85) sont placées sur la face externe du carter (73) et/ou du réservoir (75).

34. Unité de réfrigération par sorption selon la revendication 33, **caractérisée en ce que** les ailettes de refroidissement (84, 85) sont creuses et peuvent être traversées par le milieu réfrigérant (74).

35. Unité de réfrigération par sorption selon l'une des revendications 1 à 27 ou 29 à 34, **caractérisée en ce que** l'unité de réfrigération comporte un élément de chauffage pour chauffer le corps de chauffe.

36. Unité de réfrigération par sorption selon la revendication 28 ou 35, **caractérisée en ce que** l'élément de chauffage est un brûleur fonctionnant avec un combustible solide, liquide ou gazeux.

37. Unité de réfrigération par sorption selon la revendication 28 ou 35, **caractérisée en ce que** l'élément de chauffage fonctionne à l'énergie solaire et comporte en particulier un miroir parabolique qui peut être orienté sur la partie du corps de chauffe qui est en saillie par rapport à la partie sorbante.
